# EUROPÄISCHE PATENTSCHRIFT

(11) **EP 0 634 669 B1**
(45) Veröffentlichungstag und Bekanntmachung des Hinweises auf die Patenterteilung: **24.09.1997**
(21) Anmeldenummer: 94110574.4
(22) Anmeldetag: 07.07.1994
(51) Int. Cl.: G01S 13/90, G01S 7/02

(54) **Verfahren zur Klassifikation eines Gegenstandes und Verwendung des Verfahrens**
Method for classifying an object and application thereof
Procédé de classification d'un objet et l'application du procédé

(30) Priorität: 15.07.1993 DE 4323625; 03.03.1994 DE 4406907
(43) Veröffentlichungstag der Anmeldung: 18.01.1995
(73) Patentinhaber: Daimler-Benz Aerospace Aktiengesellschaft, 81663 München (DE)
(72) Erfinder: Schmid, Johannes, Dr. rer. nat., D-89075 Ulm (DE); Schmitt, Peter, Dr. Ing., D-89287 Bellenberg (DE)
(74) Vertreter: Fröhling, Werner Otto, Dr.

(56) Entgegenhaltungen:
- GB-A- 2 189 962
- US-A- 4 855 747
- US-A- 5 184 133

## Beschreibung

Die Erfindung betrifft ein Verfahren zur Klassifikation eines Gegenstandes nach dem Oberbegriff des Patentanspruchs 1 sowie die Verwendung eines solchen Verfahrens.

Mit Hilfe einer Doppler-Radaranlage ist es möglich, einen Radarwellen reflektierenden Gegenstand aufgrund seines Radar-Echosignales und der daraus ermittelten Spurdaten, insbesondere Position sowie Positionsänderungen, zu klassifizieren und/oder identifizieren.

Aus der Größe des Gegenstandes sowie dessen räumlicher Position und/oder deren Änderungen kann dieser klassifiziert werden. Bei dieser Klassifikation kann z.B. zwischen Luftfahrzeugen, die auch Satelliten beinhalten sollen, Schiffen, Landfahrzeugen sowie sogenannten Festzielen unterschieden werden. Eine derartige Klassifikation kann bedarfsweise in weitere Unterklassen unterteilt werden und wird dann auch Identifikation genannt. Aus diesem Grunde wird im folgenden auch der Begriff Klassifikation und/oder Identifikation verwendet.

Das Auflösungsvermögen sowie die Zuverlässigkeit eines solchen Klassifikations- und/oder Identifikationsverfahrens sind im wesentlichen abhängig von der Apertur der Radarantenne sowie der Art des Radarverfahrens, z.B. Puls-Doppler-Radarverfahren oder CW-Radarverfahren (Dauerstrich-Radarverfahren).

Aus der US-A-5 184 133 ist ein Verfahren zur Beseitigung von Auswanderungseffekten im Entfernungsbereich bekannt, welche Doppler-Störungen in ISAR-Bildern von bewegten Radar-Zielen, insbesondere Schiffen, verursachen. Dabei wird zunächst ein ISAR-Bild für die unbewegten (Radar-)Zellen (Doppler = 0) des (Radar-)Zieles erzeugt. Anschließend werden die dafür verwendeten Daten-Punkte entsprechend der tatsächlich vorhandenen Doppler-Frequenzverschiebung korrigiert und ein neues ISAR-Bild erzeugt, welches dem bewegten (Radar-)Ziel entspricht.

Der Erfindung liegt die Aufgabe zugrunde, ein gattungsgemäßes Verfahren anzugeben, mit dem bei einer Klassifikation und/oder Identifikation eine hohe räumliche Auflösung und eine zuverlässige und kostengünstige Auswertung der auf einem Sichtschirm darstellbaren Radarbilder ermöglicht wird. Der Erfindung liegt weiterhin die Aufgabe zugrunde, vorteilhafte Verwendungen eines solchen Verfahrens anzugeben.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß das Verfahren universell verwendbar ist und daher an verschiedenartige Radaranlagen und/oder Überwachungsaufgaben angepaßt werden kann.

Ein zweiter Vorteil besteht darin, daß kostengünstig erzeugbare zweidimensionale Radarbilder verwendet werden. Dabei ist eine zuverlässige Auswertung auf einem Sichtschirm durch einen Beobachter möglich.

Weitere Vorteile sind der folgenden Beschreibung entnehmbar.

Die Erfindung beruht auf der Verwendung des sogenannten ISAR-Verfahrens (Inverses Synthetisches Apertur Radar), mit welchem die Apertur der Radarantenne erheblich vergrößert werden kann. Bei dem klassischen SAR-Verfahren wird vorzugsweise ein Puls-Radarverfahren verwendet mit einer Sende-/Empfangsantenne, die an sich eine kleine Apertur besitzt, da die gesamte Puls-Radaranlage z.B. als Bordradar eines Flugzeugs ausgebildet ist. Es wird nun ausgenutzt, daß der Weg, z.B. der Flugweg, der (Bord-)Radaranlage sehr genau bekannt ist, z.B. mit einer maximal zulässigen Abweichung von λ/4, wobei λ die Wellenlänge der verwendeten Radarwellen bedeutet. Wird nun die (Bord-)Radaranlage um die Strecke L bewegt und werden die Radar-Echosignale jeweils zu Beginn und am Ende der Strecke L gemeinsam ausgewertet, so ergibt sich für die (Bord-)Radaranlage eine Zielauflösung (Winkelauflösung) proportional zu λ/L. Diese Zielauflösung der bewegten (Bord-)Radaranlage ist wesentlich größer als diejenige der (Bord-)Radarantenne an sich. Mit einer derart bewegten (Bord-)Radaranlage ist nicht nur in Entfernungsrichtung, die in der englischsprachigen Literatur auch "range" oder "slant range" genannt wird, eine radiale Zielauflösung im Meter-Bereich, z.B. kleiner 5 m, möglich, sondern auch senkrecht zur Entfernungsrichtung, im englischen auch "cross range" genannt.

Bei dem inversen SAR, dem sogenannten ISAR-Verfahren wird zusätzlich das Doppler-Signal ausgewertet, das auf einer Drehbewegung des Zieles um eine seiner Drehachsen beruht, z.B. um die Roll- und/oder Nick- und/oder Gierachse. Über diese Drehbewegung werden die Zielabmessungen in "cross range"-Richtung ermittelt. Es sind minimale Drehbewegungen von einigen Grad /sec erforderlich und es können in "cross range" Zielauflösungen unter 1 m erreicht werden.

Da beim ISAR-Verfahren die Informationen aus Drehbewegungen des Zieles hergeleitet werden, ist - im Gegensatz zum SAR-Verfahren - eine Bewegung der Radaranlage nicht unbedingt erforderlich.

Bei dem ISAR-Verfahren werden nun bevorzugt zweidimensionale Radarbilder, die auch ISAR-Bilder genannt werden, eines (Radar-)Zieles auf einem Sichtschirm dargestellt. Dabei werden "Cross Range" und "Slant Range" (oder "Range") in einem rechtwinkligen Koordinatensystem dargestellt, wobei die Wahl der Achsen beliebig ist.

Derartige ISAR-Bilder sind schwierig auswertbar, da im allgemeinen weder die Art des detektierten Gegenstandes (Radar-Ziel) noch dessen räumliche Lage bekannt sind.

Dieser scheinbare Nachteil wird dadurch beseitigt, daß zunächst die Spurdaten, die auch Trackdaten genannt werden, eines Radarzieles, z.B. eines Flugzeuges, ermittelt werden. Bei dem beispielhaft genannten Flugzeug werden als Spurdaten zumindest Geschwindigkeit und Flugweg ermittelt. Diese Spurdaten können vorteilhafterweise auf eine beliebige Art und Weise ermittelt werden, z.B. durch die (Bord-)Radaranlage, welche die ISAR-Bilder erzeugt, und/oder durch eine Boden- oder Schiffradaranlage und/oder durch Satellitennavigation. Anhand der Spurdaten wird zunächst eine grobe Klassifikation des Radarzieles vorgenommen. Beispielsweise kann bei einem Luftfahrzeug aufgrund der (Flug-)Geschwindigkeit und/oder des Flugweges z.B. zwischen einem Zeppelin, einem Hubschrauber, einem Sport- oder Verkehrsflugzeug sowie einem Militär-Flugzeug unterschieden werden. Mit dieser Kenntnis und einer weiteren Auswertung der Spurdaten wird die räumliche Lage, bezogen auf ein beliebiges Inertialsystem, des Gegenstandes (Radarziel) ermittelt. Beispielsweise wird aus der Kenntnis: Militärflugzeug, z.B. Jagdflugzeug, Geschwindigkeit sowie Kurvenradius des momentan geflogenen Flugweges, aufgrund der (Flug-)Physik die räumliche Lage des Gegenstandes (Flugzeuges) ermittelt. Beispielsweise kann bei einem Kurvenflug bezüglich der durch den Flugweg bestimmten Ebene festgestellt werden, daß dagegen die momentane Flugzeugebene, das ist die durch die Tragflächen (Nickachse) und die Längsachse (Rollachse) bestimmte Ebene, um einen bestimmten Winkel um die Rollachse gedreht sein muß, da ansonsten der Kurvenflug aufgrund der (Flug-)Physik nicht möglich ist.

Mit Hilfe dieser Daten wird nun ein Referenz-Gegenstand, der ungefähr dem tatsächlichen Radarziel entspricht, ausgewählt, beispielsweise ein Referenz-Jagdflugzeug, das ungefähr die geometrischen Abmessungen und ungefähr die dreidimensionale geometrische Form des Radarzieles besitzt. Diese Auswahl erfolgt vorzugsweise mit Hilfe einer Datenverarbeitungsanlage, in der verschiedene Referenz-Gegenstände gespeichert werden.

Dieser Referenz-Gegenstand sowie die Spurdaten des Radarzieles werden nun an die (Bord-)Radaranlage, in welcher die zweidimensionalen ISAR-Bilder erzeugt werden, übermittelt. Da dort nun Abstand und Richtung des Radarzieles bekannt sind, kann nun dort von dem Referenz-Gegenstand dessen zu erwartende optische zweidimensionale Ansicht ermittelt werden. Diese optische Ansicht, vorzugsweise ein entsprechender Umriß, des entsprechend der (Flug-)Lage gedrehten Referenz-Gegenstandes (Flugzeug) wird nun dem ISAR-Bild des Radarzieles überlagert. Da nun von dem Referenz-Gegenstand die zugehörigen ISAR-Bilder und/oder Radar-Streuzentren bekannt sind, kann nun in kostengünstiger und zuverlässiger Weise ermittelt werden, ob das ISAR-Bild des Radarzieles dem Referenz-Gegenstand zugeordnet werden kann. Mit diesem Vergleich ist eine genaue und zuverlässige Klassifikation und/oder Identifikation von Radarzielen für verschiedene Anwendungen möglich, was nachfolgend noch näher erläutert wird.

Die Erfindung wird im folgenden anhand eines Beispieles, das sich auf die Klassifikation und/oder Identifikation eines Flugzeuges bezieht, unter Bezugnahme auf schematisch dargestellte Figuren näher erläutert. Dabei zeigen:
FIG. 1 und FIG. 2 den Zusammenhang zwichen Range- und Cross range-Achsen für ISAR-Bilder in Abhängigkeit von der Drehachse des Flugzeuges bei verschiedenen Flugzuständen;
FIG. 3 und FIG. 4 zeigen zu einem Luftfahrzeug gehörende ISAR-Bilder;
FIG. 5 und FIG. 6 zeigen den FIG. 3 und FIG. 4 entsprechende ISAR-Bilder, denen Umrisse eines entsprechenden Referenz-Gegenstandes(Flugzeuges) überlagert sind.

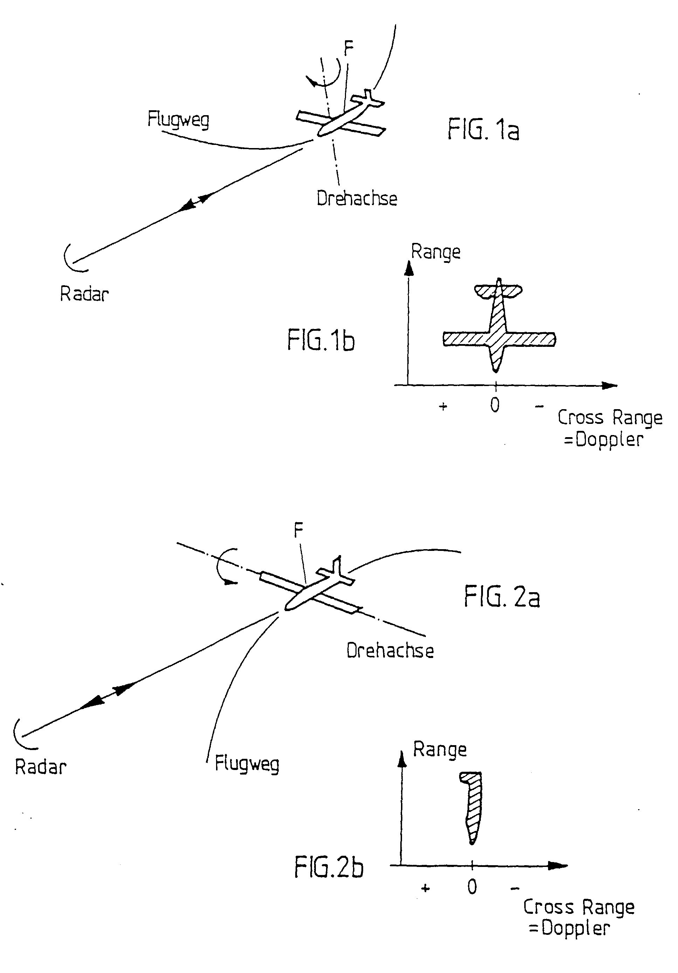

FIG. 1a zeigt ein Flugzeug F (Ziel), das einen sogenannten waagrechten Kurvenflug ausführt. Von dem zugehörigen Flugweg werden die entsprechenden Spurdaten (Trackdaten) in der beschriebenen Weise ermittelt. Daraus ist auch die Drehachse des Flugzeugs F bestimmbar. Die mit Radar bezeichnete Pulsdoppler-(Bord-)Radaranlage des gleichen oder eines weiteren Flugzeuges erzeugt nach dem beschriebenen ISAR-Verfahren ein ISAR-Bild des Zieles aus der dargestellten Perspektive, d.h. ungefähr mit einer momentanen (Radar-)Blickrichtung in Richtung der Längsachse des Flugzeuges F. Im weiteren Verlauf des waagrechten Kurvenfluges stellt sich die Cross-Range-Achse (Doppler-Achse) senkrecht zur Fluglängsache, und es entssteht ein ISAR-Bild entsprechend einer Draufsicht des Flugzeuges F (FIG. 1b).

FIG. 2a zeigt dieselbe Ausgangssituation wie FIG. 1a, jedoch leitet das Flugzeug F (Ziel) einen Sinkflug ein, d.h. das Flugzeug F dreht sich um seine Nickachse. Im weiteren Verlauf des Flugweges ist daher im ISAR-Bild der (Bord-)Radaranlage (Radar) eine Seitenansicht des Flugzeuges F zu erwarten.

Bei den aus den Spurdaten der Flugwege ermittelten Referenz-Flugzeugen werden nun die den Flugwegen bzw. Drehachsen entsprechenden Ansichten gewählt und diese den ISAR-Bildern überlagert, beispeilsweise eine Draufsicht dem ISAR-Bild entsprechen FIG. 1b und eine Seitenansicht entsprechend FIG. 2b.

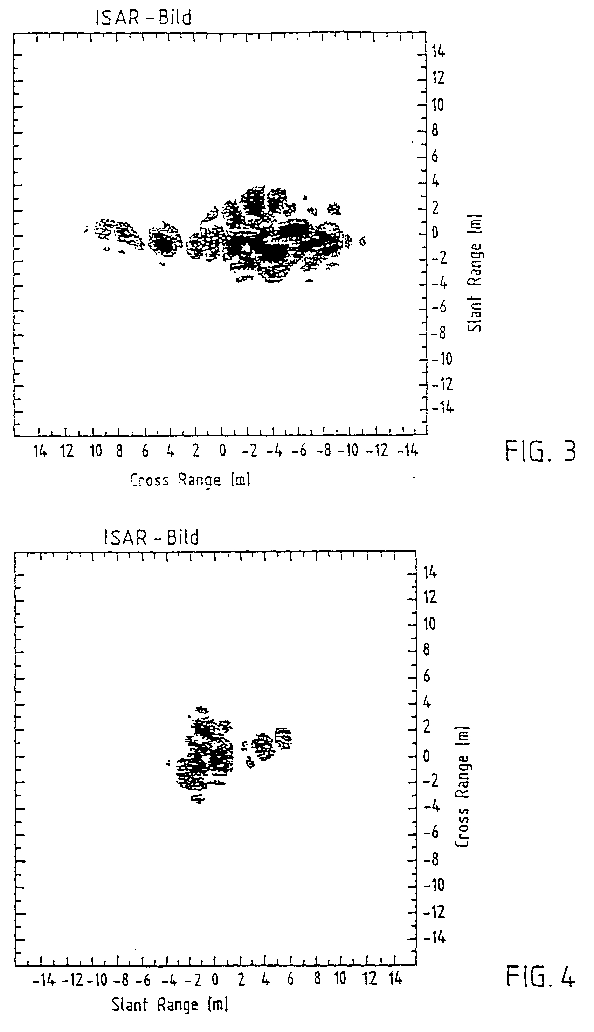

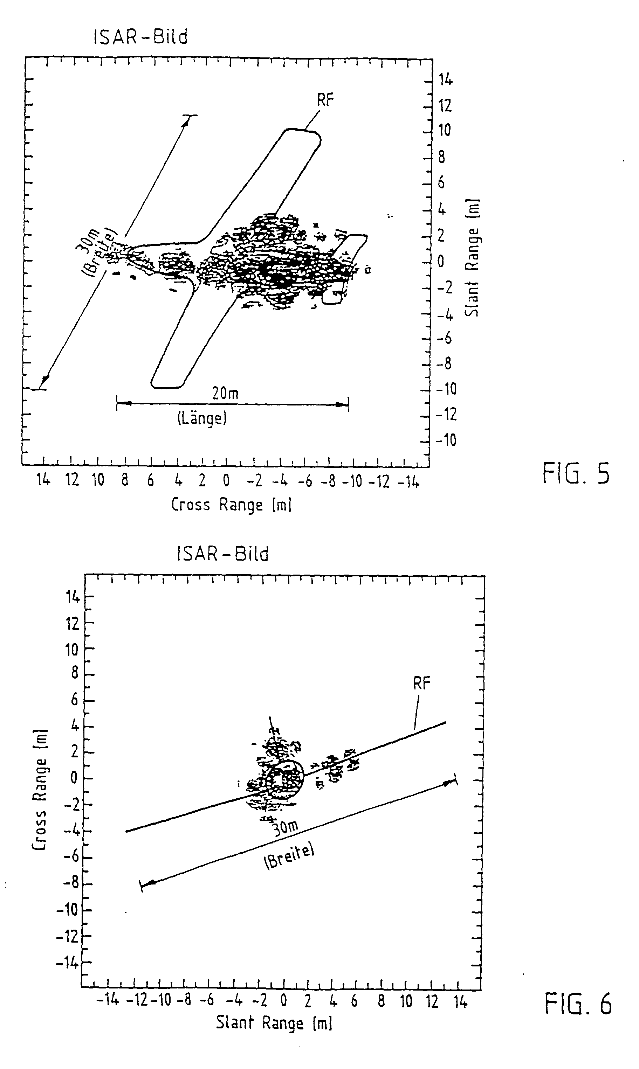

Die FIg. 3 und FIG. 4 zeigen momentane ISAR-Bilder eines Flugzeuges bei verschiedenen Flugmanövern. Es ist ersichtlich, daß daraus allenfalls mit einer sehr großen Erfahrung und/oder mit einen sehr aufwendigen Auswerteverfahren die Art des Flugzeuges und dessen Ansicht ermittelt werden kann.

Aus den zu den FIG. 3 und FIG. 4 gehörenden Spurdaten wird ermittelt, daß es sich bei dem Radar-Ziel um ein militärisches Düsenflugzeug handelt, z.B. ein Jagdflugzeug. Dementsprechend wird nun für das Referenz-Flugzeug RF (FIG. 5, FIG. 6) beispielsweise ein Flugzeug mit einer Länge von ungefähr 20 m und einer Breite (Flügelspannweite) von ungefähr 30 m ausgewählt. Die Ansicht des Referenz-Flugzeuges wird entsprechend derjenigen des zugehörigen ISAR-Bildes gewählt und der entsprechende Umriß des Referenz-Flugzeuges dem ISAR-Bild überlagert.

Dieses ist in FIG. 5 und FIG. 6 dargestellt. Aufgrund der in den ISAR-Bildern dargestellten Radar-Streuzentren ist nun leicht ersichtlich, daß das Radarziel (ISAR-Bilder) und das Referenz-Flugzeug RF bezüglich ihrer Länge (FIG. 5) sowie dem (Seiten-)Leitwerk (FIG. 6) ganz gut übereinstimmen. Bei der Form und Breite der Tragflächen ist jedoch eine sehr schlechte Übereinstimmung vorhanden. Aus den FIG. 5 und FIG. 6 ist jedoch ersichtlich, daß das Radarziel ein Flugzeug mit sehr stark nach hinten gepfeilten Flügeln ist. Eine solche Auswertung ergibt also ein Flugzeug mit einer Länge von ungefähr 20 m, sehr stark nach hinten gepfeilten Flügeln, niedriger (Flügel-)Spannweite sowie einem relativ hohem Seitenleitwerk. Mit diesen Angaben sowie den zugehörigen Spurdaten des Flugzeuges ist eine genaue Klassifikation und/oder Identifikation des Radarzieles möglich.

Das beschriebene Verfahren ist nicht auf die beschriebenen Beispiele beschränkt, sondern in vielfältiger Weise anwendbar. Beispielsweise kann die Art der Doppler-Radaranlage (Z.B. Puls- oder CW-Anlage) entsprechend der Art und/oder Entfernung der zu klassifizierenden und/oder identifizierenden Radarziele, z.B. Satelliten, Luft- oder Landfahrzeuge sowie Schiffe, gewählt werden. Weiterhin ist die Auswahl des Referenz-Gegenstandes, die Wahl der Ansicht sowie der Vergleich mit dem ISAR-Bild mit Hilfe eines Bilderkennungs- und Vergleichsverfahrens in einer Datenverarbeitungsanlage möglich.

Mit dem erfindungsgemäßen Verfahren ist insbesondere eine vorteilhafte Überwachung von Luft- oder Schiffahrtswegen möglich. So kann beispielsweise bei einem möglichen Kollisionskurs zweier Flugzeuge oder Schiffe das Flugzeug bzw. das Schiff mit der besten Manövrierfähigkeit ermittelt und die beteiligten Flugzeug- bzw. Schiffsführer entsprechend informiert werden, so daß diese sehr frühzeitig geeignete Ausweichmanöver einleiten können.

Außerdem ist eine Klassifikation und/oder Identifikation sogenannter nichtkooperativer Verkehrsteilnehmer möglich. Das sind Verkehrsteilnehmer, die z.B. keine automatisch arbeitende Kennungseinrichtung, z.B. einen Transponder, besitzen.

## Patentansprüche

1. Verfahren zur Klassifikation eines Gegenstandes mit Hilfe einer Doppler-Radaranlage, wobei
- durch kohärente Signalverarbeitung der von dem Gegenstand herrührenden Radarechosignale zunächst ein Videosignal erzeugt wird,
- aus dem Videosignal ein ISAR-Bild des Gegenstandes erzeugt wird,
- aus dem Videosignal für den Gegenstand zumindest die Spurdaten Position sowie Positionsänderungen ermittelt werden und
- durch Auswerten des ISAR-Bildes und der Spurdaten eine Klassifikation bezüglich der Art des Gegenstandes erfolgt, dadurch gekennzeichnet,
- daß aus den Spurdaten des Gegenstandes dessen zugehörige räumliche Drehachse ermittelt wird,
- daß anhand der Spurdaten und der räumlichen Drehachse ein Referenz-Gegenstand, der zumindest ungefähr dem tatsächlichen Radarziel entspricht, aus einer Auswahl von gespeicherten möglichen Referenz-Gegenständen ausgewählt wird,
- daß der Referenz-Gegenstand in eine räumliche Lage entsprechend der räumlichen Drehachse und des ISAR-Bildes des Gegenstandes gedreht wird,
- daß eine Darstellung des gedrehten Referenz-Gegenstandes dem ISAR-Bild des Gegenstandes überlagert wird und
- daß durch einen Vergleich der Darstellung des gedrehten Referenz-Gegenstandes mit dem ISAR-Bild die Klassifikation des Gegenstandes erfolgt.

2. Verfahren nach Anspruch 1, dadurch gekennzeichnet, daß das ISAR-Bild als zweidimensionales Radarbild erzeugt wird.

3. Verfahren nach Anspruch 1 oder Anspruch 2, dadurch gekennzeichnet, daß das ISAR-Bild mit Hilfe einer Puls-Doppler-Radarnanlage erzeugt wird.

4. Verfahren nach einem der vorhergehenden Ansprüche, dadurch gekennzeichnet, daß das ISAR-Bild mit Hilfe einer beweglichen Radaranlage hergestellt wird.

5. Verfahren nach einem der vorhergehenden Ansprüche, dadurch gekennzeichnet, daß das ISAR-Bild mit Hilfe einer Bord-Radaranlage eines Luftfahrzeuges hergesellt wird.

6. Verfahren nach einem der vorhergehenden Ansprüche zur Verwendung zur Klassifikation und/oder Identifikation eines Luftfahrzeugs.

7. Verfahren nach einem der Ansprüche 1 bis 5 zur Verwendung zur Klassifikation und/oder Identifikation eines Schiffes.

8. Verfahren nach einem der Ansprüche 1 bis 5 zur Verwendung zur Klassifikation und/oder Identifikation eines Landfahrzeuges.

9. Verfahren nach einem der Ansprüche 1 bis 5 zur Verwendung zur Klassifikation und/oder Identifikation eines nichtkooperativen Verkehrsteilnehmers.

## Claims

1. Method for the classification of an object with the aid of a Doppler radar installation, wherein
- a video signal is produced initially by coherent signal processing of the radar echo signals emanating from the object,
- an ISAR (inverse synthetic aperture radar) image is produced from the video signal,
- at least the track data of position and changes in position are ascertained from the video signal for the object and
- a classification in respect of the kind of the object takes place by evaluation of the ISAR image and of the track data, characterised thereby,
- that the spatial axis of rotation of the object is ascertained from the track data thereof,
- that a reference object, which corresponds at least approximately with the actual radar target, is chosen from a selection of stored possible reference objects with the aid of the track data and the spatial axis of rotation,
- that the reference object is rotated into a spatial position corresponding with the spatial axis of rotation and the ISAR image of the object,
- that a representation of the rotated reference object is superimposed on the ISAR image of the object and
- that the classification of the object takes place by a comparison of the representation of the rotated reference object with the ISAR image.

2. Method according to claim 1, characterised thereby, that the ISAR image is produced as two-dimensional radar image.

3. Method according to claim 1 or claim 2, characterised thereby, that the ISAR image is produced with the aid of a pulse Doppler radar installation.

4. Method according -to one of the preceding claims, characterised thereby, that the ISAR image is produced with the aid of a mobile radar installation.

5. Method according to one of the preceding claims, characterised thereby, that the ISAR image is produced with the aid of an on-board radar installation of an aircraft.

6. Method according to one of the preceding claims for use for the classification and/or identification of an aircraft.

7. Method according to one of the claims 1 to 5 for use for the classification and/or identification of a ship.

8. Method according to onee of the claims 1 to 5 for use for the classification and/or identification of a land vehicle.

9. Method according to one of the claims 1 to 5 for use for the classification and/or identification of an unco-operative road user.

## Revendications

1. Procédé de classification d'un objet à l'aide d'une installation radar Doppler, dans lequel:
- grâce à un traitement de signal cohérent des signaux d'écho radar provenant de l'objet on produit tout d'abord un signal vidéo,
- à partir du signal vidéo on produit une image ISAR de l'objet,
- à partir du signal vidéo on détermine pour l'objet au moins les données de traçage que sont la position et les modifications de position, et
- par évaluation de l'image ISAR et des données de traçage on procède à une classification pour ce qui concerne le genre de l'objet, caractérisé en ce que :
- on détermine à partir des données de traçage de l'objet ses axes de rotation associés dans l'espace,
- à l'aide des données de traçage et des axes de rotation dans l'espace, on choisit un objet de référence qui correspond au moins approximativement à la cible radar réelle, à partir d'un choix d'objets de référence possibles mémorisés,
- l'objet de référence est tourné dans une position dans l'espace qui correspond aux axes de rotation dans l'espace et à l'image ISAR de l'objet,
- on superpose à image ISAR de l'objet une représentation de l'objet de référence tourné, et
- on procède à la classification de l'objet par une comparaison de la représentation de l'objet de référence tourné avec l'image ISAR.

2. Procédé selon la revendication 1, caractérisé en ce que l'image ISAR est produite sous forme d'une image radar bi-dimensionnelle.

3. Procédé selon l'une ou l'autre des revendications 1 et 2, caractérisé en ce que l'image radar ISAR est produite à l'aide d'une installation radar Doppler à impulsions.

4. Procédé selon l'une des revendications précédentes, caractérisé en ce que l'image ISAR est produite à l'aide d'une installation radar mobile.

5. Procédé selon l'une des revendications précédentes, caractérisé en ce que l'image ISAR est produite à l'aide d'une installation radar de bord d'un avion.

6. Procédé selon l'une des revendications précédentes, pour l'application à la classification et/ou l'identification d'un avion.

7. Procédé selon l'une des revendications 1 à 5, pour l'application à la classification et/ou l'identification d'un bateau.

8. Procédé selon l'une des revendications 1 à 5, pour l'application à la classification et/ou l'identification d'un véhicule terrestre.

9. Procédé selon l'une des revendications 1 à 5 pour l'application à la classification et/ou l'identification d'un objet en trafic non-coopératif.
